# EUROPÄISCHE PATENTANMELDUNG

(11) **EP 3 396 076 A1**
(43) Veröffentlichungstag der Anmeldung: **31.10.2018**
(21) Anmeldenummer: 18168892.0
(22) Anmeldetag: 24.04.2018
(51) Int. Cl.: E03B 1/04, E03C 1/04

(54) **DUSCHKREISLAUFSYSTEM**

(30) Priorität: 27.04.2017 DE 202017002250 U
(71) Anmelder: Malischewski, Mathias, 18057 Rostock (DE)
(72) Erfinder: Malischewski, Mathias, 18057 Rostock (DE)
(74) Vertreter: Limbeck, Achim

(57) **Zusammenfassung**

Die vorliegende Erfindung betrifft ein Duschkreislaufsystem (130) für eine Dusche oder eine Badewanne, welche zumindest eine Handbrause (111) und/oder einen Duschkopf (123), eine Wanne (115) oder einen Duschboden sowie mindestens eine Öffnung (118) umfasst, welche für die Ableitung von Brauchwasser über eine Drainage vorgesehen ist, wobei mittels des Duschkreislaufsystems (130) das Brauchwasser aus der Wanne (115) oder dem Duschboden zumindest teilweise aufgefangen und in dem Duschkreislauf wieder verwendet wird und das Duschkreislaufsystem (130) zumindest eine Pumpeneinheit (210) mit einem Gehäuse (211) und mit wenigstens einer Pumpt (221) sowie eine Kreislaufwasserleitung (122) umfasst. Das erfindungsgemäße Duschkreislaufsystem (130) ist dadurch gekennzeichnet, dass wenigstens ein Lüfter (251) zum Trocknen des Inneren der Pumpe (221), der Kreislaufwasserleitung (122) sowie des Duschkopfes (123) vorgesehen ist.

## Beschreibung

### Technisches Gebiet

Die vorliegende Erfindung betrifft ein Duschkreislaufsystem nach dem Obersatz des Patentanspruchs 1.

### Stand der Technik

Bei einem Kreislaufduschsystem nach US2014/0304908 oder DE202016007421 besteht grundsätzlich das Problem, dass nach dem Betriebsende Wasser oder Feuchtigkeit im System verbleibt und dieser Zustand über längere Zeit anhält. Dies kann in Kombination mit eingetragenen Keimen aus der Luft oder über das Wasser zu einer Bildung von Algen, Schimmel oder sonstigen Pilzen führen, wobei sowohl das Innere des Gehäuses als auch für die Leitungen, Pumpen und der Duschkopf betroffen sind.

Aus dem Bereich von Whirlpools ist bekannt, dass konstruktiv für eine gute Restwasserentleerung im Leitungssystem gesorgt wird. Zudem wird empfohlen in regelmäßigen Abständen eine Desinfektion durchzuführen. Bei Whirlpools mit zusätzlichen Luftdüsen, die sich zumeist im Boden der Wanne befinden, werden diese nach dem Betrieb ausgeblasen.

### Darstellung der Erfindung

Der vorliegenden Erfindung liegt die Aufgabe zu Grunde, ein Duschkreislaufsystem zu schaffen, welches die vorgenannten Probleme ausräumt und welches so ausgebildet ist, dass es eine mögliche Bildung von Algen, Schimmel oder sonstigen Pilzen wirksam verhindert. Grundlage für deren Wachstum sind vor allem Nahrung und Feuchtigkeit. Würde das Duschkreislaufsystem nach dem Betrieb nicht getrocknet werden, würden sich über einen langen Zeitraum Wassertropfen an den Oberflächen befinden und im Duschkreislaufsystem nahezu vollständig mit Wasser gesättigte Luft ergeben. Das Abtrocknen nach jedem Kreislaufbetrieb ist deutlich einfacher zu realisieren als ein Ausschließen aller möglichen Nahrungsquellen für Pilze und Keime.

Erfindungsgemäß wird die voranstehende Aufgabe gemäß dem Oberbegriff des Anspruchs 1 in Verbindung mit den kennzeichnenden Merkmalen gelöst. Vorteilhafte Ausgestaltungen und Weiterbildungen des erfindungsgemäßen Duschkreislaufsystems sind in den abhängigen Unteransprüchen angegeben.

Das erfindungsgemäße Duschkreislaufsystem ist gemäß dem bereits in der DE 20 2016 007 421 U1 vorgestellten Duschkreislaufsystems für eine Dusche oder eine Badewanne ausgebildet, welche zumindest eine Handbrause und/oder einen Duschkopf, eine Wanne oder einen Duschboden sowie mindestens eine Öffnung umfasst, welche für die Ableitung von Brauchwasser über eine Drainage vorgesehen ist, wobei mittels des Duschkreislaufsystems das Brauchwasser aus der Wanne oder dem Duschboden zumindest teilweise aufgefangen und in dem Duschkreislauf wieder verwendet wird und das Duschkreislaufsystem zumindest eine Pumpeneinheit mit einem Gehäuse und mit wenigstens einer Pumpe und einen Frischwasserzulauf umfasst.

Erfindungsgemäß ist das Duschkreislaufsystem dadurch gekennzeichnet, dass wenigstens ein Lüfter zum Trocknen des Inneren der Pumpe, der Kreislaufwasserleitung sowie des Duschkopfes vorgesehen ist. In einer vorteilhaften Weiterbildung der Erfindung kann auch zusätzlich wenigstens ein Lüfter zum Trocken des inneren Gehäuses der Pumpeneinheit vorgesehen sein.

### Kurzbeschreibung der Zeichnungen

Weitere Ziele, Merkmale, Vorteile und Anwendungsmöglichkeiten des erfindungsgemäßen Duschkreislaufsystem ergeben sich aus der nachfolgenden Beschreibung eines Ausführungsbeispiels anhand der Zeichnungen.

In den Zeichnungen zeigen
Fig. 1 eine Duschzelle mit einem Duschkreislaufsystem;
Fig. 2 eine Detailansicht des Duschkreislaufsystems in einem seitlichen Schnitt.

### Ausführung der Erfindung

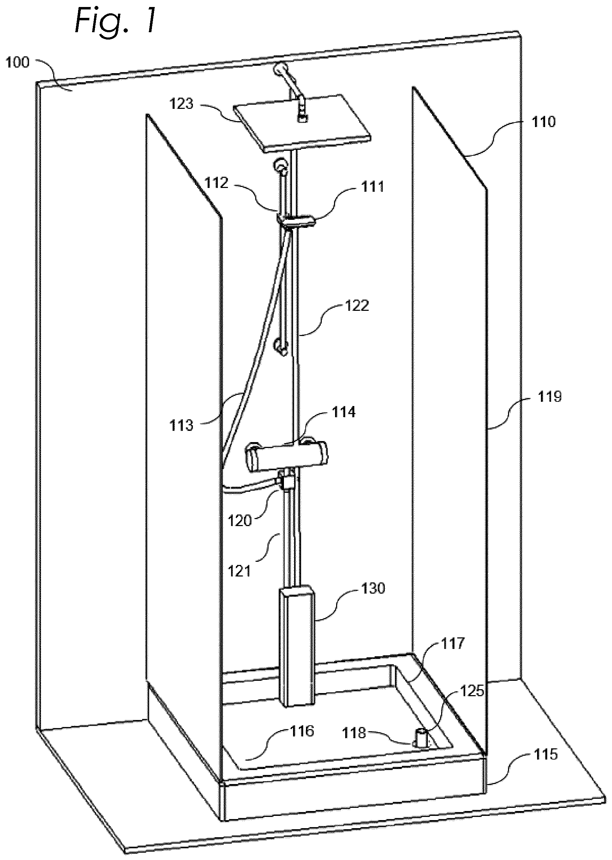

Fig. 1 stellt eine Duschzelle 100 dar, die für einen Kreislaufbetrieb mit einem Duschkreislaufsystem 130 versehen ist. Die Duschzelle umfasst vorzugsweise eine Duschkabine 110, eine Handbrause 111 für einen Frischwasserbetrieb, die an einer Halterung 112 befestigt und über eine Leitung 113 mit einem vorteilhaft vorgesehenen Frischwasserzulauf 114 verbunden ist. Der Frischwasserzulauf 114 kann beispielsweise als eine Mischbatterie für die Zuführung von heißem und kaltem Frischwasser ausgeführt sein. Die Leitung 113 ist vorzugsweise über ein Umschaltventil 120 mit dem Frischwasserzulauf 114 verbunden.

Die Duschkabine 110 umfasst vorteilhafterweise eine Wand 119 und eine Wanne 115 mit einem Boden 116 und einem Rand 117 oder einen Duschboden sowie eine Öffnung 118, welche für die Ableitung von Abwasser über eine Drainage nicht gezeigt vorgesehen ist. Die Öffnung 118 kann mittels eines Überlaufstöpsels 125 verschlossen werden.

Das Duschkreislaufsystem 130 ist vorteilhafterweise so ausgestaltet, dass es eben auf dem Boden 116 der Wanne 115 oder dem Duschboden angeordnet werden kann und dass es Brauchwasser, welches sich in der Wanne 115 angesammelt hat, aufnehmen kann. Weiterhin ist das Duschsystem 130 vorzugsweise über eine Leitung 121 mit dem Umschaltventil 120 bzw. dem Frischwasserzulauf 114 verbindbar, so dass das Duschkreislaufsystem 130 bei Bedarf vortemperiertes Frischwasser aufnehmen kann.

Das Duschkreislaufsystem 130 ist über eine weitere Kreislaufwasserleitung 122 mit einem Duschkopf 123 verbunden.

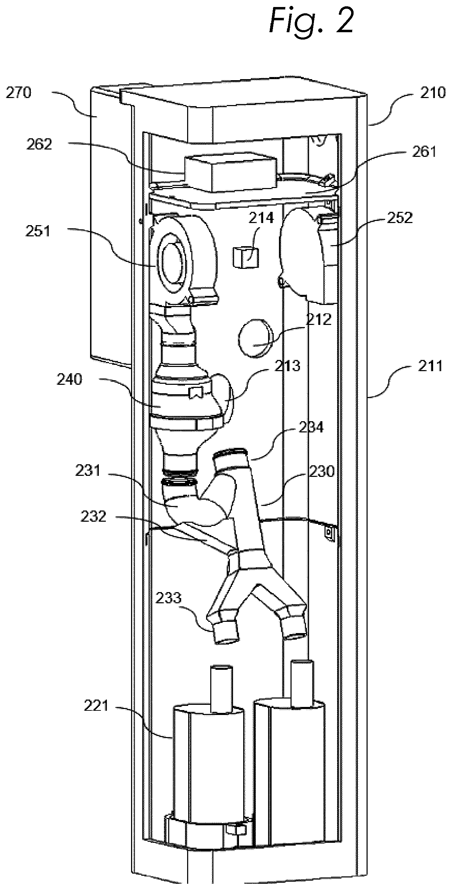

Fig. 2 zeigt das Duschkreislaufsystem 130, bestehend aus einer Pumpeneinheit 210 und einer leicht abnehmbaren Akkueinheit 270. Im Boden der Pumpeneinheit 210 befinden sich ein oder mehrere Pumpen 221, die das Wasser im Kreislauf bewegen.

Im oberen Gehäuseteil ist der Lüfter 251 angeordnet, der einen oder mehrere Bestandteile des Kreislaufsystems abtrocknet. Dies betrifft hier vorteilhafterweise die Pumpe 221, die Kreislaufwasserleitung 122 sowie den Duschkopf 123.

Im oberen Teil der Pumpeneinheit 210 befindet sich in dieser Ausführung ein weiterer Lüfter 252, der dafür vorgesehen ist, das Gehäuse 211 im Inneren, die Oberfläche der eingehausten Komponenten sowie das Sieb im Boden abzutrocknen.

Die Lüfter 251, 252 können sowohl ein Ventilator als auch ein Gebläse sein. Grundsätzlich ist auch ein Verdichter vorstellbar.

Um die Geschwindigkeit der Trocknung zu erhöhen, können im Luftstrom der Lüfter 251,252 Heizelemente verbaut sein. Diese erhöhen die Temperatur der Luft, wodurch diese mehr Feuchtigkeit aufnehmen kann.

Um den Lüfter 251 im Kreislaufbetrieb vom Wasserstrom zu entkoppeln, befindet sich zwischen Lüfter 251 und Pumpe 221 vorzugsweise ein Ventil 240. Dieses Ventil 240 besteht in einer bevorzugten Ausführung im Inneren aus einem Mechanismus, der in Richtung zum Lüfter 251 hin, den Wasserstrom absperrt und in Richtung vom Lüfter 251 weg dessen Luftstrom passieren lässt. Die kann beispielsweise über eine leichte Kugel realisiert werden, die in einen Ventilsitz durch den Wasserstrom gepresst wird und dadurch abdichtet. Bei Fehlen des Wasserstroms fällt die Kugel durch Gravitationskraft in einen Bereich mit größerem Querschnitt. Es ist auch ein selbsttätiger Mechanismus auf Basis von Klappen vorstellbar.

Zwischen Ventil 240 und Pumpe 221 befindet sich ein Verteiler 230, der Lüfter 251 und Ventil 240 auf einen Seitenarm bringt. Der Verbindungszweig 231 zum Ventil 240 ist mit einer starken Krümmung versehen, um den Luftstrom des Lüfters 251, der zunächst nach unten gerichtet ist, nach oben in Richtung Duschkopf 123 umzulenken. Zusätzlich ist im Verbindungszweig 231 zum Ventil 240 ein Bypass 232 vorgesehen, der einen Teil des Luftstroms vom Lüfter 251 in Richtung Pumpe 221 leitet.

In einer bevorzugten Ausführung wird der Großteil des Luftstroms nach oben in Richtung Duschkopf 123 geleitet. Zudem hat der Bypass 232 die Aufgabe, stehendes Wasser im Tiefpunkt der Umlenkung im Verbindungszweigs 231 zu vermeiden, da dieses nur sehr schwer über den Luftstrom abzutrocknen wäre. Dazu ist der Bypass 232 an den Tiefpunkt des Verbindungszweiges 231 angeschlossen.

Sowohl in Fig. 1 als auch in Fig. 2 sind alle Komponenten so angeordnet, dass ein durchgängiges Gefälle besteht und keine Sicken entstehen in den sich Wasser sammeln und dieses überall abfließen kann.

Die Aktivierung und Deaktivierung des Trocknungssystems kann manuell über einen Schalter erfolgen. In einer bevorzugten Ausführung erfolgt das Abschalten über einen elektrischen Schalter 262 in den ein Zeitschalter integriert ist, so dass das System selbsttätig nach einer definierten Zeit abschaltet.

In einer alternativen Ausführung wird der elektrische Schalter 262 mit Signalen aus einem Luftfeuchtigkeitssensor 214 versorgt und kann selbständig situationsgerecht das Trocknungssystem zu- und abschalten. Der elektrische Schalter befindet sich bevorzugt in einem wassergeschützten Bereich, den eine Trennplatte 261 abgrenzt.

Das erfindungsgemäße Duschkreislaufsystem beschränkt sich in seiner Ausführung nicht auf die vorstehend angegebenen bevorzugten Ausführungsformen. Vielmehr sind eine Vielzahl von Ausgestaltungsvariationen denkbar, welche von der dargestellten Lösung auch bei grundsätzlich anders gearteter Ausführung Gebrauch machen.

### Liste der Bezugsziffern

- 100: Duschzelle
- 110: Duschkabine
- 111: Handbrause
- 112: Halterung
- 113: Leitung für Frischwasserdusche
- 114: Frischwasserzulauf
- 115: Wanne
- 116: Boden
- 117: Rand
- 118: Öffnung
- 119: Wand
- 120: Umschaltventil
- 121: Leitung für Zuheizung
- 122: Kreislaufwasserleitung
- 123: Duschkopf
- 125: Überlaufstöpsel
- 130: Duschkreislaufsystem
- 210: Pumpeneinheit
- 211: Gehäuse
- 212: Öffnung für Frischwasserzulauf
- 213: Öffnung für Ausgang Kreislaufschlauch
- 214: Luftfeuchtigkeitssensor
- 221: Pumpe
- 230: Verteiler
- 231: Verbindungszweig zum Ventil
- 232: Bypass für Luft
- 233: Verbindungszweig Pumpen
- 234: Verbindungszweig Kreislaufschlauch
- 240: Ventil
- 251: Lüfter für Kreislaufinneres
- 252: Lüfter für Gehäuseinneres
- 261: Trennplatte
- 262: elektrisches Schaltelement
- 270: Akkueinheit

## Patentansprüche

1. Duschkreislaufsystem (130) für eine Dusche oder eine Badewanne, welche zumindest eine Handbrause (111) und/oder einen Duschkopf (123), eine Wanne (115) oder einen Duschboden sowie mindestens eine Öffnung (118) umfasst, welche für die Ableitung von Brauchwasser über eine Drainage vorgesehen ist, wobei mittels des Duschkreislaufsystems (130) das Brauchwasser aus der Wanne (115) oder dem Duschboden zumindest teilweise aufgefangen und in dem Duschkreislauf wieder verwendet wird und das Duschkreislaufsystem (130) zumindest eine Pumpeneinheit (210) mit einem Gehäuse (211) und mit wenigstens einer Pumpe (221) sowie eine Kreislaufwasserleitung (122) umfasst,
**dadurch gekennzeichnet, dass**
wenigstens ein Lüfter (251) zum Trocknen eines oder mehrerer Bestandteile des Duschkreislaufsystems (130) vorgesehen ist.

2. Duschkreislaufsystem (130) nach Anspruch 1,
**dadurch gekennzeichnet, dass**
der wenigstens eine Lüfter (251) zum Trocknen des Inneren der Pumpe (221) und/oder der Kreislaufwasserleitung (122) und/oder des Duschkopfes (123) ausgebildet ist.

3. Duschkreislaufsystem (130) nach Anspruch 1 oder 2,
**dadurch gekennzeichnet, dass**
wenigstens ein weiterer Lüfter (252) zum Trocken des inneren Gehäuses (211) der Pumpeneinheit (210) vorgesehen ist.

4. Duschkreislaufsystem (130) nach Anspruch 3,
**dadurch gekennzeichnet, dass**
der Lüfter (251) über ein Ventil (240) und einen Verteiler (230) in Verbindung mit der Pumpe (221) steht.

5. Duschkreislaufsystem (130) nach Anspruch 4,
**dadurch gekennzeichnet, dass**
das Ventil (240) im Kreislaufbetrieb durch Wasserdruck geschlossen wird und im Trocknungsbetrieb durch Schwerkraft selbständig öffnet.

6. Duschkreislaufsystem (130) nach Anspruch 4 oder 5,
**dadurch gekennzeichnet, dass**
der Verteiler (230) an einem Verbindungszweig (231) angeordnet ist, der eine Auftrennung des Luftstroms nach oben hin zum Duschkopf (123) und nach unten hin durch einen Bypass (232) zu der Pumpe (221) ermöglicht.

7. Duschkreislaufsystem (130) nach Anspruch 6,
**dadurch gekennzeichnet, dass**
der Bypass (232) im Tiefpunkt an einen Verbindungszweig (231) anschließt, so dass dieser keine Senke aufweist, in der das Wasser nicht abfließen kann.

8. Duschkreislaufsystem (130) nach einem der vorangegangenen Ansprüche, **dadurch gekennzeichnet, dass**
der Lüfter (251) oberhalb des Ventils (240) und der Pumpe (221) angeordnet ist.

9. Duschkreislaufsystem (130) nach einem der vorangegangenen Ansprüche, **dadurch gekennzeichnet, dass**
elektrische Heizelemente vorgesehen sind, um den Luftstrom der Lüfter (251, 252) zu erwärmen.

10. Duschkreislaufsystem (130) nach einem der vorangegangenen Ansprüche, **dadurch gekennzeichnet, dass**
ein elektrischer Schalter (262) zur Schaltung der Lüfter (251, 252) vorgesehen ist.

11. Duschkreislaufsystem (130) nach Anspruch 10,
**dadurch gekennzeichnet, dass**
der elektrische Schalter (262) eine Zeitsteuerung umfasst, um die Lüfter (251, 252) selbständig nach einer bestimmten Zeit abschalten zu können.

12. Duschkreislaufsystem (130) nach Anspruch 9 oder 11,
**dadurch gekennzeichnet, dass**
der elektrische Schalter (262) über die Signale eines Feuchtigkeitsmessers (214) die Lüfter (251, 252) selbständig schaltet.
